# FASCICULE DE BREVET EUROPEEN

(11) **EP 1 758 010 B1**
(45) Date de publication et mention de la délivrance du brevet: **16.04.2008**
(21) Numéro de dépôt: 06291321.5
(22) Date de dépôt: 18.11.1996
(51) Int. Cl.: G06F 1/00, H04L 29/06, G06F 21/00

(54) **Procédé d'authentification d'un utilisateur travaillant dans un environnenment distribué en mode client/serveur**
Verfahren zur Authentifizierung eines Teilnehmers in einer verteilten Client/Server Netzwerkumgebung
Method for authentication of a user in a distributed client/server network environment

(30) Priorité: 20.11.1995 FR 9513741
(43) Date de publication de la demande: 28.02.2007
(62) Demande divisionnaire de: 96402473.1
(73) Titulaire: BULL SAS, 78340 Les Clayes sous Bois (FR)
(72) Inventeur: Pinkas, Denis, 92370 Chaville (FR)
(74) Mandataire: Pellegrini, Marie Claude

(56) Documents cités:
- EP-A2- 0 636 963
- "METHOD OF AUTHENTICATED PASSWORD OR PASSPHRASE CHANGING" IBM TECHNICAL DISCLOSURE BULLETIN, vol. 36, no. 11, 1 novembre 1993 (1993-11-01), pages 285-289, XP000424864
- HALLER N M: "THE S/KEY(TM) ONE-TIME PASSWORD SYSTEM" ISOC SYMPOSIUM ON NETWORK AND SYSTEMS SECURITY, 1 janvier 1994 (1994-01-01), pages 151-157, XP000565853
- JOHNSON J T: "SIGN ON AND BE SAFE IBM'S NETWORK SECURITY PROGRAM (NETSP)" DATA COMMUNICATIONS, vol. 24, no. 1, 1 janvier 1995 (1995-01-01), page 122, 124, XP000480828
- B.C.NEUMAN ET AL: "Kerberos: An Authentication Service for Computer Networks" IEEE COMMUNICATIONS MAGAZINE, septembre 1994 (1994-09), pages 33-38, XP002010524 US

## Description

La présente invention concerne un procédé d'authentification d'un utilisateur travaillant dans un environnement distribué en mode client/serveur.

De manière générale, en informatique et notamment avec les réseaux complexes de systèmes distribués, il apparaît indispensable de prévoir et organiser des services permettant d'assurer la sécurité de l'environnement réparti. En effet, utiliser une informatique ouverte et distribuée présente d'énormes avantages puisqu'il est alors permis à un utilisateur d'accéder aux différentes données de tels systèmes quelle que que soit la situation géographique dudit utilisateur et quelle que soit le système sur lequel résident les données. Cependant, si l'utilisateur désire profiter de ces avantages, il souhaite également que certaines données, considérées comme confidentielles ou critiques, soient protégées et que leur accès ne soit autorisé qu'à certains utilisateurs et ceci dans des conditions et selon des conventions préétablies. De manière connue, les services de sécurité, en particulier en informatique distribuée, sont composés de fonctions complétant celles fournies par les plates-formes ou applications individuelles telles le contrôle d'accès, l'audit, l'intégrité et l'authentification de l'origine des données concernant les demandes et les réponses des utilisateurs.

Ainsi, de manière courante, la condition nécessaire pour autoriser les communications en réduisant l'insécurité inhérente à l'utilisation de tels systèmes, est que les utilisateurs ou les divers systèmes désirant établir une connexion soient authentifiés, ce qui implique le lancement d'un "appel" lors de la demande initiale de connexion. Il est à noter cependant, que les techniques traditionnelles d'authentification utilisant le transfert direct (c'est-à-dire tel que communiqué par l'utilisateur au terminal informatique) d'un mot de passe sur une ligne de communication se sont avérées trop vulnérables à un certain nombre d'attaques pour constituer une riposte efficace et unique à cette exigence de sécurité. La tendance actuelle est plutôt de privilégier une authentification basée sur des techniques cryptographiques qui fournissent une solution autrement plus efficace. De simples mots de passe chiffrés ne sont pourtant pas suffisants et il a été en conséquence nécessaire de développer des technologies plus puissantes telles que celles des systèmes à mots de passe à utilisation unique, appelés "one-time passwords" (OTP) par l'homme du métier, utilisant une information secrète suffisamment longue appelée "phrase de passe" ("de l'anglais pass-phrase") tel celui décrit dans le document intitulé "A One-Time Password System" publié en tant que "INTERNET DRAFT" et édité par Neil Haller et Craig Metz en date du 23 octobre 1995, S/Key (S/Key est une marque de Bellcore) en étant un parfait exemple (les différents systèmes actuels de ce type étant, en fait, dérivés du système S/Key), une description de ce système ayant été faite par Neil Haller, dans le recueil des conférences du Symposium ISOC sur la sécurité des réseaux et des systèmes répartis de San Diégo sous le titre "The S/KEY One-Time Password System" publié en février 1994 ou bien encore les systèmes du type Kerberos (Kerberos a été développé par le Massachussetts Institute of Technology) dont le protocole est décrit dans le document RFC 1510, "The Kerberos Network Authentication Service [V5]", septembre 1993 publié par l'IETF (Internet Engineering Task Force) ainsi que dans la publication intitulée « Kerberos : An Authentication Service for Computer Networks » parue dans IEEE Communications Magazine en Septembre 1994.

Des méthodes de modification des "phrases de passe" sont connus dans l'art intérieur, par exemple divulgué dans le document "METHOD OF AUTHENTICATED PASSWORD OR PASSPHRASE CHANGING" IBM TECHNICAL DISCLOSURE BULLETIN, vol. 36, no. 11, 1 novembre 1993 (1993-11-01), pages 285-289.

La technologie d'authentification des systèmes à mots de passe à utilisation unique (appelés dans la suite OTP par souci de simplification et de concision), ces mots de passe qui comme le nom l'indique ne peuvent être utilisés qu'une seule fois comme moyen d'authentification, a été développée pour autoriser l'accès aux systèmes et aux diverses applications requérant une authentification conçue pour faire échec aux attaques dites passives, c'est-à-dire fondées sur l'utilisation frauduleuse, après capture sur le réseau lors d'une connexion, de mots de passe réutilisables. Une telle forme d'attaque contre des systèmes de traitement en réseau peut être effectuée subséquemment à une "écoute" de connexions sur le réseau, destinée à intercepter des informations relatives à une authentification, ces informations, une fois interceptées, étant ensuite utilisées pour accéder au système de traitement. Les systèmes OTP ont été conçus pour parer à ce type d'attaque que l'homme du métier appelle également couramment attaque par rejeu ("replay attack"). Un système OTP utilise en fait une "phrase de passe" secrète, connue seulement de l'utilisateur, pour générer une séquence de mots de passe de type OTP. La "phrase de passe" secrète de l'utilisateur n'est ainsi, avec ce système, jamais présente sur le réseau, ce qui rend le système invulnérable aux attaques passives. Ce système présente cependant un certain nombre d'inconvénients, car s'il est particulièrement performant face aux attaques passives, il s'avère inefficace lors d'attaques dites actives, c'est-à-dire qu'il ne fournit aucune protection contre une attaque dans laquelle un intrus intercepte, bloque puis "rejoue" ou modifie des informations en train d'être transmises. En ce qui concerne plus particulièrement le système S/Key, qui est le mécanisme OTP duquel les différents systèmes OTP ont été dérivés, le mot de passe qui est vu par le réseau n'est, comme son nom l'indique, jamais le même deux fois. Ce mot de passe est calculé à partir d'une "phrase de passe" secrète connue seulement de l'utilisateur, ce qui signifie que le serveur ne connaît jamais cette "phrase de passe". Le serveur stocke d'abord soit une valeur initiale destinée à vérifier le premier OTP à recevoir soit le dernier OTP reçu suite à une authentification réussie. Il stocke aussi le nombre de valeurs restant à recevoir.

La valeur initiale destinée à vérifier le premier OTP à recevoir est calculée selon les étapes suivantes. Une étape préalable consiste à concaténer la "phrase de passe" avec une "graine" (appelée également "seed" par l'homme du métier) spécifique au serveur. Ceci permet d'utiliser la même "phrase de passe" pour plusieurs serveurs. Puis à l'étape subséquente, une fonction de compression non inversible (appelée "hash" par l'homme du métier) est appliquée "n+1" fois et le résultat est alors communiqué puis stocké dans le serveur associé à ce compte "n+1".

Lors d'une authentification le serveur communique la valeur de la "graine" et le compte courant m.

Ce compte m spécifie à l'utilisateur le nombre d'itérations à pratiquer pour l'application de la fonction de compression non inversible.

Lors de la vérification, le serveur pratique une et une seule itération supplémentaire de fonction de compression non inversible sur la valeur reçue puis s'il obtient la même valeur que la valeur qui est stockée, considère l'authentification comme réussie, lui substitue alors la valeur reçue et décrémente son compte d'une unité.

Cette technique peut être utilisée de deux manières différentes:
1) soit à partir d'un terminal de confiance (appelé "trusted terminal" par l'homme du métier),
2) soit à partir d'un terminal quelconque (appelé "untrusted terminal"par l'homme du métier).

Dans le premier cas, l'utilisateur communique la "phrase de passe" au terminal qui effectue les calculs précédents.

Dans le second cas, l'utilisateur calcule à l'avance sur un terminal de confiance un certain nombre d'OTP et recopie cette information sur un papier. Il pourra ensuite entrer ces valeurs au fur et à mesure de ses besoins d'authentification sans oublier de rayer, après chaque authentification réussie, la valeur correspondante.

Pour des raisons de sécurité, mais aussi pour des raisons pratiques du fait de la valeur du compte courant m qui limite la durée d'utilisation du système OTP, la « phrase de passe » doit pouvoir être réinitialisée en fin d'utilisation. De façon générale, il n'existe pas actuellement de méthode de réinitialisation pour un système de type OTP en tant que tel. Une publication dans le « IBM Technical Disclosure Bulletin » en Novembre 1993, sous le titre « Method of Authenticated Password or Passphrase Changing », décrit un protocole basé sur des paires de clés, chacune constituée d'une clé pour générer un code d'authentification de message (MAC Key) et d'une clé de cryptage de clé (KEK). Ce protocole repose sur l'utilisation d'une première paire de clés calculée à partir de la « phrase de passe » et d'une seconde paire de clés calculée selon la même méthode à partir de la nouvelle « phrase de passe ». La seconde paire de clés est chiffrée avec la première paire de clés avant d'être envoyée au serveur. Sur le serveur, la première paire de clés a été installée au préalable pour permettre le déchiffrage de la seconde paire de clés et son installation.

Kerberos a été, quant à lui, le premier système dédié à la sécurité d'un environnement distribué. Kerberos repose uniquement sur l'utilisation de clés secrètes et est particulièrement bien adapté à une utilisation par des organisations de taille modeste. Avec la technique actuelle utilisée par Kerberos il est nécessaire de pouvoir déchiffrer une information contenue dans la réponse du serveur d'authentification au moyen d'une clé secrète partagée. De plus l'information servant à déchiffrer est directement dérivée du mot de passe Kerberos. Kerberos permet d'authentifier un client par exemple à partir de son identité ou d'un nom mais ne supporte aucun autre privilège (identifiant d'accès, rôle, appartenance à un groupe, capacités, etc.). Kerberos supporte également l'authentification mutuelle de même que l'intégrité et la confidentialité des données mais ne comporte aucune fonction d'autorisation. La technique d'authentification de Kerberos est basée sur l'utilisation d'un mot de passe appelé mot de passe Kerberos. Ce mot de passe doit être communiqué par l'utilisateur à un terminal de confiance. En effet, s'il était "volé" par le terminal le bénéficiaire de ce vol pourrait alors s'authentifier en lieu et place de l'utilisateur légitime. Il est à noter en outre, que jusqu'à présent, il n'existe pas de technique publiée pour une utilisation de Kerberos sans risque sur un terminal quelconque.

Pour pallier aux faiblesses de Kerberos, la possibilité d'une combinaison avec d'autres systèmes, comme une clé publique de cryptage
ou bien un système OTP, avait été proposée (« Kerberos : An Authentication Service for Computer Networks », Septembre 1994), sans pour autant être réalisée. Même une extension à la spécification du protocole de Kerberos (RFC 1510, « The Kerberos Network Authentication Service [Version 5] », septembre 1993) a été intégrée à des systèmes OTP et propose une méthode par l'intermédiaire de laquelle divers mécanismes OTP peuvent être supportés à l'intérieur dudit protocole, cette combinaison de l'usage des OTP avec Kerberos a pour principale conséquence de contraindre l'utilisateur à utiliser deux informations : le mot de passe Kerberos et la « phrase de passe ». Ce qui va à l'encontre de la tendance générale qui est de n'utiliser qu'une information afin de ménager la mémoire de l'utilisateur. En particulier, le protocole Kerberos version 5 spécifie un moyen standard grâce auquel les données de préauthentification et les champs d'indication d'erreur dans les messages sous Kerberos peuvent être utilisés pour transporter des données de type OTP, cette méthode présentant aussi, bien entendu, les mêmes sérieux inconvénients, l'utilisateur devant obligatoirement mémoriser deux informations de taille non négligeable: la "phrase de passe" qui doit être suffisament longue pour assurer une sécurité satisfaisante en rendant impraticable la connaissance de ladite "phrase de passe" et le mot de passe Kerberos. De plus, l'utilisateur ne peut se servir sans risque de cette méthode à partir d'un terminal quelconque sur lequel il rentrerait le mot de passe Kerberos. Avec un tel terminal, ce mot de passe pourrait être dérobé et ainsi l'utilisateur ne pourrait plus l'employer de manière isolée ce qui l'obligerait à se servir systématiquement de la combinaison du mot de passe Kerberos et de la "phrase de passe", combinaison plutôt lourde et pénible pour une utilisation répétée ou même journalière.

La présente invention a pour but de remédier aux divers inconvénients des différentes méthodes de l'art antérieur connues et propose un procédé dans lequel une seule information d'authentification doit être mémorisée par l'utilisateur et qui possède deux variantes selon que ledit utilisateur accède à son système d'information au moyen d'un terminal de confiance ou d'un terminal quelconque et ceci, tout en permettant de conserver, de manière aisée et efficace, un haut niveau de sécurité.

Pour cela, le procédé d'authentification d'un utilisateur travaillant dans un environnement distribué en mode client/serveur mentionné dans le préambule est remarquable en ce que, chaque authentification est effectuée à partir d'une seule information d'authentification à mémoriser, la "phrase de passe", de longueur et de durée d'utilisation (fonction d'une valeur de comptage) déterminées et ce, que ce soit dans un système du type à mot de passe à utilisation unique OTP intégré à un système Kerberos ou bien dans un système du type à mot de passe à utilisation unique OTP utilisé seul.

Ainsi, selon l'idée de l'invention et ceci contre toute attente une seule information d'authentification doit être mémorisée: la "phrase de passe", et ceci, qu'un système OTP soit utilisé seul ou en combinaison avec un système Kerberos et que l'utilisateur à authentifier ait accès à un terminal de confiance ou à un terminal quelconque.

En particulier, lorsqu'un système du type à mot de passe à utilisation unique OTP est utilisé intégré à un système Kerberos, le procédé d'authentification selon la présente invention requiert d'installer préalablement deux types d'informations spécifiques dans le serveur d'authentification, lesdites informations étant toutes dérivées d'une seule et unique "phrase de passe" de longueur suffisante, le premier type d'information étant calculé selon la méthode OTP qui fournit une valeur de vérification, une "graine" et un compte qui est le compte courant m, le second type d'information étant calculé de la manière suivante:
Mot de passe Kerberos=fonction non inversible ("phrase de passe", constante 1)
où la constante 1 est une valeur publique, c'est-à-dire accessible et non secrète permettant l'utilisation d'un seul type de fonction non inversible pour l'ensemble des procédés.

De manière remarquable, lorsqu'un système du type à mot de passe à utilisation unique OTP est utilisé intégré à un système Kerberos, un protocole de communication unique est utilisé entre le serveur et le terminal, qui peut être un terminal de confiance ou un terminal quelconque, le serveur d'authentification restant ignorant du fait qu'un terminal de confiance ou un terminal quelconque est utilisé. Ce protocole de communication unique est le suivant:
- dans le sens d'échange d'information du terminal de l'utilisateur vers le serveur d'authentification, l'utilisateur envoie son identifiant et un mot de passe à utilisation unique OTP, si l'authentification est réussie, la phase suivante correspond à l'envoi d'une réponse du serveur d'authentification vers le terminal de l'utilisateur, cette réponse contenant une information chiffrée obtenue en utilisant une clé calculée de la manière suivante:
   Clé de chiffrement = fonction non inversible (mot de passe Kerberos, mot de passe à utilisation unique OTP reçu)
   alors que la clé de déchiffrement du message de réponse du serveur est calculée du côté client en utilisant la formule suivante:
   Clé de déchiffrement = fonction non inversible (mot de passe Kerberos, dernier mot de passe à utilisation unique OTP envoyé)
   le terminal de l'utilisateur étant alors à même:
- soit de calculer, à partir de la "phrase de passe" fournie par l'utilisateur, le mot de passe à utilisation unique ainsi que la clé de déchiffrement dans le cas d'utilisation d'un terminal de confiance,
- soit de recevoir ces deux informations dans le cas d'utilisation d'un terminal quelconque.

Il est bon ici d'insister sur le fait que la "phrase de passe" doit être de longueur suffisante, c'est-à-dire d'au moins dix caractères pour dissuader d'entreprendre une recherche exhaustive de la "phrase de passe" à partir d'un mot de passe à utilisation unique sauf à y passer un temps démesurément long. De même il est à souligner que de manière avantageuse le protocole de communication utilisé entre le serveur et le terminal de l'utilisateur à authentifier est unique, c'est-à-dire qu'un seul et même protocole est utilisé indépendamment du fait que le terminal dont l'utilisateur se sert est un terminal de confiance ou bien un terminal quelconque. En conséquence, le serveur d'authentification reste ignorant du fait qu'un terminal de confiance ou un terminal quelconque a été utilisé.

De manière caractéristique, lorsqu'un système du type à mot de passe à utilisation unique OTP est utilisé intégré à un système Kerberos, si un terminal de confiance est utilisé, l'utilisateur fournit la "phrase de passe", le mot de passe Kerberos étant alors déduit en utilisant la formule:
mot de passe Kerberos=fonction non inversible ("phrase de passe", constante 1)

Puis il est possible d'en déduire la clé de déchiffrement en utilisant la formule:
Clé de déchiffrement = fonction non inversible (mot de passe Kerberos, dernier mot de passe à utilisation unique OTP envoyé).

La clé de déchiffrement qui sert du côté client pour déchiffrer le message de réponse du serveur est donc calculée avec la même formule que celle correspondant à la clé de chiffrement. Le client peut ainsi déchiffrer le message de réponse du serveur en utilisant cette clé et n'a en aucun cas la moindre information à chiffrer.

Lorsqu'un terminal quelconque est utilisé, il est important qu'à aucun moment le mot de passe Kerberos ne soit communiqué par l'utilisateur audit terminal. La technique revendiquée permet de prendre aisément et efficacement en compte cette contrainte.

De manière remarquable, lorsqu'un système du type à mot de passe à utilisation unique OTP est utilisé intégré à un système Kerberos, le procédé d'authentification selon la présente invention peut être également utilisé avec un terminal quelconque, dans ce cas il est utilisé deux informations: le mot de passe à utilisation unique OTP et la clé de déchiffrement conformes à ceux dudit procédé, qui sont tous les deux précalculés et enregistrés (par exemple imprimés sur une feuille de papier), ces deux informations (à utilisation unique) étant alors rentrées sur ledit terminal quelconque tandis que le mot de passe Kerberos est utilisé avec un terminal de confiance.

Ainsi, lorsqu'un terminal quelconque est utilisé, l'utilisateur doit précalculer à l'avance à l'aide d'un terminal de confiance les clés de déchiffrement et il peut alors les enregistrer, par exemple en les recopiant sur un papier. Son papier comportera donc les informations suivantes: la valeur de l'OTP ainsi que la clé de déchiffrement associée et ce pour chaque valeur de comptage m.

La présente invention offre donc également un second aspect avantageux du fait que cette technique est utilisable sans risque à partir d'un terminal quelconque. Avec de tels terminaux, il suffit pour cela de prévoir de se servir d'informations (à utilisation unique) enregistrées sur tout support (par exemple préimprimées) et d'utiliser le mot de passe Kerberos avec un terminal de confiance.

De manière avantageuse, conformément à l'une des caractéristiques de l'invention, il est en outre proposé une technique selon laquelle il est possible de ré-initialiser la "phrase de passe" de manière sûre à partir de la même information à mémoriser et ceci même en cas d'interception active, gardant en mémoire qu'à ce jour les techniques utilisées ne sont résistantes qu'aux écoutes passives. En effet, comme cela a été précédemment noté, la "phrase de passe" n'est utilisable qu'un nombre de fois prédéterminé m et lorsque le compte m devient égal à zéro il est alors nécessaire de changer de "phrase de passe", mais dans le présent contexte, si ce changement doit être opéré de manière aisée il doit de plus être effectué avec l'assurance d'une grande sécurité.

Pour cela, de manière remarquable, lorsqu'un système du type à mot de passe à utilisation unique OTP est utilisé intégré à un système Kerberos, pour ré-initialiser la "phrase de passe" en fin de durée d'utilisation, la technique requiert préalablement d'installer au niveau du serveur une information supplémentaire dérivée d'une seule et unique "phrase de passe" de longueur suffisante (d'au moins dix caractères), cette information supplémentaire étant appelée "clé de modification" dont le calcul courant est le suivant, la "graine" étant spécifique au serveur:
Clé de modification = fonction non inversible ("phrase de passe", "graine", constante 2)
où constante 2 est une valeur publique, et lorsqu'il est désiré changer la "phrase de passe", une nouvelle "phrase de passe" étant choisie, l'utilisateur envoie impérativement à partir d'un terminal de confiance, une information sous la forme d'un message obtenu par concaténation des trois champs suivants, l'ensemble de ces champs étant scellés à l'aide de la clé de modification pour permettre de détecter toute modification non autorisée du contenu desdits champs:
- la valeur courante du mot de passe à utilisation unique OTP,
- la nouvelle valeur de vérification des mots de passe à utilisation unique OTP à stocker dans le serveur en cas de ré-initialisation réussie, cette nouvelle valeur étant associée à la valeur de comptage relative à la durée d'utilisation de la "phrase de passe" et à une "graine" spécifique au serveur permettant de partager la même "phrase de passe" avec plusieurs serveurs ne se faisant pas mutuellement confiance,
- à la fois la nouvelle valeur du mot de passe Kerberos et la nouvelle valeur de la clé de modification chiffrées par la valeur courante de la clé de modification,
la nouvelle valeur de vérification destinée à contrôler le premier mot de passe à utilisation unique OTP à recevoir étant calculée par le terminal de l'utilisateur en lui appliquant (n+1) fois la fonction non inversible après concaténation de la nouvelle "phrase de passe" avec une valeur de "graine" spécifique au serveur, permettant ainsi d'utiliser la même "phrase de passe" pour différents serveurs, tandis que, de son côté, le serveur vérifie d'abord si le premier champ envoyé est correct selon la méthode OTP, puis vérifie l'intégrité de l'ensemble des trois champs à l'aide de la clé courante de modification qu'il possède, si la vérification est réussie, il ré-initialise alors le mécanisme OTP à l'aide de la nouvelle valeur de vérification, du nombre maximum d'utilisations et de la "graine", puis déchiffre à l'aide de la clé de modification le champ chiffré et extrait la nouvelle valeur de la clé de modification et le mot de passe Kerberos et enfin met localement à jour la nouvelle valeur de la clé de modification et la nouvelle valeur du mot de passe Kerberos.

Il est important de constater ici encore qu'à aucun moment la "phrase de passe" n'est connue ou ne peut être connue du serveur.

Cette méthode peut, bien entendu selon l'idée de l'invention, être également efficacement appliquée au changement de la "phrase de passe" pour un système OTP seul non combiné avec un système Kerberos.

Dans ce cas, pour ré-initialiser la "phrase de passe" en fin de durée d'utilisation, la même technique est utilisée en installant préalablement au niveau du serveur une information supplémentaire dérivée d'une seule et unique "phrase de passe" de longueur suffisante (d'au moins dix caractères). Cette information supplémentaire est la clé de modification dont le calcul courant est le suivant, la "graine" étant spécifique au serveur:
Clé de modification = fonction non inversible ("phrase de passe", "graine", constante 2)
où constante 2 est une valeur publique.

Cette clé de modification est confidentielle. Toutefois le seul fait de connaître sa valeur ne permet pas directement de commettre une fraude. Ainsi, de manière similaire au précédent cas, lorsqu'il devient nécessaire de changer la "phrase de passe", une nouvelle "phrase de passe" étant choisie, l'utilisateur va envoyer, impérativement à partir d'un terminal de confiance, une information sous la forme d'un message obtenu par concaténation des trois champs suivants, l'ensemble de ces champs étant scellés à l'aide de la clé de modification pour permettre de détecter toute modification non autorisée du contenu desdits champs:
- valeur courante du mot de passe à utilisation unique OTP,
- la nouvelle valeur de vérification des mots de passe à utilisation unique OTP à stocker dans le serveur en cas de ré-initialisation réussie, cette nouvelle valeur étant associée à la valeur de comptage relative à la durée d'utilisation de la "phrase de passe" et à une "graine" spécifique au serveur permettant de partager la même "phrase de passe" avec plusieurs serveurs ne se faisant pas mutuellement confiance,
- la nouvelle valeur de la clé de modification chiffrée par la valeur courante de la clé de modification.

La nouvelle valeur de vérification destinée à contrôler le premier mot de passe à utilisation unique OTP à recevoir est calculée en lui appliquant (n+1) fois la fonction non inversible après concaténation de la nouvelle "phrase de passe" avec une valeur de "graine" spécifique au serveur permettant ainsi d'utiliser la même "phrase de passe" pour différents serveurs, tandis que de son côté, le serveur vérifie d'abord si le premier champ envoyé est correct selon la méthode OTP, puis vérifie l'intégrité de l'ensemble des trois champs à l'aide de la clé courante de modification qu'il possède, si la vérification est réussie, il ré-initialise alors le mécanisme OTP à l'aide de la nouvelle valeur de vérification, du nombre maximum d'utilisations et de la "graine", puis il déchiffre à l'aide de la clé courante de modification le champ chiffré et extrait la nouvelle valeur de la clé de modification et enfin il met localement à jour la nouvelle valeur de la clé de modification.

Il est important d'insister à cet endroit sur le fait que ces deux méthodes de changement de la "phrase de passe" requièrent toutes les deux l'usage d'un terminal de confiance et ne doivent en aucun cas être exécutées sur un terminal quelconque.

Pour une meilleure appréhension de l'idée de l'invention, la description suivante, qui n'est bien entendu pas limitative, fera bien comprendre dans quel environnement l'invention s'insère et comment elle peut être réalisée.

Tout d'abord, quelques rappels et précisions relativement à l'art antérieur constitué par les systèmes de type OTP. Les deux éléments fondamentaux à considérer, le client et le serveur, fonctionnent de la manière suivante dans de tels systèmes. Le serveur doit envoyer une information appelée par l'homme du métier "challenge", "challenge"composé du nombre d'itérations à effectuer et de la valeur de la "graine" spécifique au serveur. Le client doit émettre le mot de passe OTP adéquat produit à partir de la "phrase de passe" secrète entrée par l'utilisateur et à partir de l'information dite "challenge" fournie par le serveur. Le serveur doit alors vérifier le mot de passe OTP reçu, stocker le dernier mot de passe correct reçu avec la valeur de comptage correspondante. Le serveur doit aussi autoriser, et ceci de manière aisée et en toute sécurité, le changement de la "phrase de passe" secrète de l'utilisateur.

Dans le système OTP, le client de son côté envoie la "phrase de passe" secrète avec la valeur de "graine", partie du "challenge", reçue du serveur, la fonction de compression non inversible étant appliquée de manière itérative un nombre de fois correspondant à la valeur de comptage courante afin d'obtenir le mot de passe OTP, à chaque utilisation, le nombre d'itérations de la fonction non inversible étant donc décrémenté d'une unité. Ainsi, une séquence unique de mots de passe est engendrée. Le serveur vérifie le mot de passe OTP reçu du client en appliquant une seule fois la fonction non inversible et en comparant le résultat obtenu avec le précédent mot de passe OTP correctement reçu. De manière connue, la sécurité d'un système OTP en fait, repose sur l'efficacité de la fonction de compression non inversible qui doit être prévue pour permettre un calcul simple à effectuer dans un sens, le sens direct, mais interdire ou au moins rendre quasi-impossible le calcul dans le sens inverse.

Jusqu'à présent, il était unanimement reconnu et admis comme inéluctable qu'il n'était pas possible de changer la "phrase de passe" et de sélectionner une nouvelle valeur de comptage stockée dans le serveur lorsque la valeur de comptage m courante devenait égale à zéro sans perdre les avantages du principe même des systèmes OTP, le principe étant que le système doit demeurer sûr même en cas de connaissance de l'information contenue dans le serveur.

Dans ce qui suit il est expliqué pourquoi, une quelconque personne connaissant la valeur de la clé de modification et les paramètres de vérification n'a aucune possibilité d'action directe. Ainsi qu'il a été dit auparavant, le seul fait de connaître la valeur de la clé de modification ne permet pas directement de commettre une fraude. Cependant, une attaque plus sophistiquée est possible, attaque qui implique une complicité avec une personne qui peut lire à l'avance la valeur de la clé de modification puis procéder à une attaque active. Ainsi, si dans une première étape, une personne obtient la valeur de la clé de modification, dans une seconde étape cette personne ou une autre personne doit attendre le lancement de la part d'un utilisateur d'une commande de changement de "phrase de passe" puis bloquer l'information et remplacer à la volée certains champs par ses propres valeurs et ensuite recalculer à la volée la valeur de contrôle de l'intégrité sur les données. Une telle attaque doit cependant être préparée à l'avance et il est de plus à noter qu'elle nécessite l'utilisation en temps réel d'algorithmes d'intégrité et de chiffrement. Aucun précalcul complet n'étant réalisable, il est par conséquent impossible de commettre une fraude en effectuant simplement une substitution de champs.

Pour résumer et conclure, ce procédé peut être efficacement utilisé dans un système du type à mot de passe à utilisation unique OTP intégré à un système Kerberos ou bien dans un système du type à mot de passe à utilisation unique OTP utilisé seul. Selon une caractéristique essentielle, lorsqu'un utilisateur se sert d'un terminal de confiance, la présente invention consiste à n'utiliser et donc à ne mémoriser qu'une unique information, la "phrase de passe", le mot de passe Kerberos, dans le cas d'utilisation d'un système du type à mot de passe à utilisation unique OTP intégré à un système Kerberos, étant en fait dérivé de cette "phrase de passe". Selon une autre caractéristique importante, la technique décrite ci-avant peut également être efficacement utilisée à partir d'un terminal quelconque. Pour cela, il suffit que l'utilisateur ait précalculé et préenregistré (par exemple en imprimant sur une feuille de papier) deux informations, un mot de passe à utilisation unique et une clé de déchiffrement, ces deux informations (à utilisation unique) enregistrées étant alors rentrées sur ledit terminal quelconque tandis que le mot de passe Kerberos est utilisé avec un terminal de confiance. Enfin, il est également proposé selon l'invention une technique grâce à laquelle il est permis de ré-initialiser la "phrase de passe" en fin de durée d'utilisation de manière sûre et ceci même en cas d'interception active et ceci que ce soit dans un système du type à mot de passe à utilisation unique OTP intégré à un système Kerberos ou bien dans un système du type à mot de passe à utilisation unique OTP utilisé seul.

## Revendications

1. Procédé d'authentification d'un utilisateur travaillant dans un environnement distribué en mode client/serveur chaque authetification étant effectuée à partir d'une seule information d'authentification à mémoriser, la « phrase de passe », de longueur et de durée d'utilisation déterminées, applicable dans un système du type à mot de passe à utilisation unique seul, **caractérisé en ce que**, lorsqu'un système du type à mot de passe à utilisation unique OTP est utilisé seul, pour ré-initialiser la "phrase de passe" en fin de durée d'utilisation, il est préalablement installé au niveau du serveur une information supplémentaire dérivée d'une seule et unique "phrase de passe" de longueur suffisante, cette information supplémentaire étant appelée "clé de modification" dont le calcul courant est le suivant, la "graine" étant spécifique au serveur:
Clé de modification = fonction non inversible ("phrase de passe", "graine", constante 2)
où constante 2 est une valeur publique, et lorsqu'il désire changer la "phrase de passe", une nouvelle "phrase de passe" étant choisie, l'utilisateur envoie, impérativement à partir d'un terminal de confiance, une information sous la forme d'un message obtenu par concaténation des trois champs suivants, l'ensemble de ces champs étant scellés à l'aide de la clé de modification pour permettre de détecter toute modification non autorisée du contenu desdits champs:
- la valeur courante du mot de passe à utilisation unique OTP,
- la nouvelle valeur de vérification des mots de passe à utilisation unique OTP à stocker dans le serveur en cas de ré-initialisation réussie, cette nouvelle valeur étant associée à la valeur de comptage relative à la durée d'utilisation de la "phrase de passe" et à une "graine" spécifique au serveur permettant de partager la même "phrase de passe" avec plusieurs serveurs ne se faisant pas mutuellement confiance,
- la nouvelle valeur de la clé de modification chiffrée par la valeur courante de la clé de modification,
la nouvelle valeur de vérification destinée à contrôler le premier mot de passe à utilisation unique OTP à recevoir étant calculée par le terminal de l'utilisateur en lui appliquant (n+1) fois la fonction non inversible après concaténation de la nouvelle "phrase de passe" avec une valeur de "graine" spécifique au serveur, permettant ainsi d'utiliser la même "phrase de passe" pour différents serveurs, tandis que, de son côté, le serveur vérifie d'abord si le premier champ envoyé est correct selon la méthode OTP, puis vérifie l'intégrité de l'ensemble des trois champs à l'aide de la clé courante de modification qu'il possède, si la vérification est réussie, il ré-initialise alors le mécanisme OTP à l'aide de la nouvelle valeur de vérification, du nombre maximum d'utilisations et de la "graine", puis déchiffre à l'aide de la clé de modification le champ chiffré et extrait la nouvelle valeur de la clé de modification et enfin met localement à jour la nouvelle valeur de la clé de modification.

## Claims

1. Method for authentication of a user working in a distributed environment in client/server mode, each authentication being carried out on the basis of a single piece of authentication information to be stored, the "passphrase", of a given length and usage time, applicable in a system of the type having only a one-time password, **characterised in that**, when a system of the type having a one-time password OTP is used alone, in order to reinitialise the "passphrase" at the end of the usage time, an additional piece of information is first installed on the server, said information being derived from a single and unique "passphrase" of sufficient length, this additional information being called a "modification key", the usual calculation of which is as follows, the "seed" being specific to the server:
Modification key = non-invertible function ("passphrase", "seed", constant 2)
where constant 2 is a public value, and when he wishes to change the "passphrase", a new "passphrase" having been chosen, the user sends, from a trusted terminal only, a piece of information in the form of a message obtained by concatenating the following three fields, all these fields being sealed by means of the modification key in order to allow any unauthorised modification of the contents of said fields to be detected:
- the current value of the one-time password OTP,
- the new verification value of the one-time passwords OTP to be stored in the server in the event of successful reinitialisation, this new value being associated with the counting value related to the usage time of the "passphrase" and to a "seed" specific to the server allowing the same "passphrase" to be shared with several mutually non-trusting servers,
- the new value of the modification key encrypted by the current value of the modification key,
the new verification value intended to check the first one-time password OTP to be received being calculated by the user terminal by applying to it (n+1) times the non-invertible function after concatenation of the new "passphrase" with a "seed" value specific to the server, thus allowing the same "passphrase" to be used for different servers, while, for its part, the server first checks whether the first field sent is correct according to the OTP method, then checks the integrity of all three fields using the current modification key that it possesses, if verification is successful, it then re-initialises the OTP mechanism by means of the new verification value, the maximum number of uses and the "seed", then using the modification key decrypts the encrypted field and extracts the new value of the modification key and finally locally updates the new value of the modification key.

## Patentansprüche

1. Verfahren zum Authentifizieren eines Anwenders, der in einer verteilten Umgebung im Client/Server-Betrieb arbeitet, wobei jede Authentifizierung ausgehend von einer einzigen zu speichernden Authentifizierungsinformation, die "Passphrase", die eine bestimmte Länge und eine bestimmte Nutzungsdauer hat, die in ein System des Typs mit Passwort mit einmaliger Nutzung eingebbar ist, ausgeführt wird, **dadurch gekennzeichnet, dass** dann, wenn ein System des Typs mit OTP-Passwort mit einmaliger Nutzung allein verwendet wird, um die "Passphrase" am Ende der Nutzungsdauer zu reinitialisieren, im Voraus auf Seiten des Servers eine zusätzliche Information installiert wird, die aus einer einzigen und eindeutigen "Passphrase" mit ausreichender Länge abgeleitet wird, wobei diese zusätzliche Information "Modifizierungsschlüssel" genannt wird, dessen aktuelle Berechnung folgendermaßen geschieht, wobei der "Kern" für den Server spezifisch ist:
Modifizierungsschlüssel = nicht invertierbare Funktion("Passphrase", "Kern", Konstante 2)
wobei Konstante 2 ein öffentlicher Wert ist, wobei der Anwender dann, wenn er die "Passphrase" ändern möchte und eine neue "Passphrase" wählt, von einem notwendigen vertraulichen Endgerät eine Information in Form einer Nachricht abschickt, die durch Verknüpfung der drei folgenden Felder erhalten wird, wobei die Gesamtheit dieser Felder mit Hilfe des Modifizierungsschlüssels versiegelt wird, um jede nicht autorisierte Modifikation des Inhalts dieser Felder erfassen zu können:
- der momentane Wert des OTP-Passworts mit einmaliger Nutzung,
- der neue Wert zur Verifikation der OTP-Passwörter mit einmaliger Nutzung, die im Server im Fall einer erfolgreichen Reinitialisierung zu speichern sind, wobei dieser neue Wert dem Zählwert bezüglich der Nutzungsdauer der "Passphrase" und einem für den Server spezifischen "Kern" zugeordnet ist und ermöglicht, dieselbe "Passphrase" mit mehreren Servern, die sich nicht gegenseitig vertrauen, zu nutzen,
- der neue Wert des Modifizierungsschlüssels, der durch den momentanen Wert des Modifizierungsschlüssels chiffriert ist,
wobei der neue Verifikationswert, der dazu bestimmt ist, das zu empfangende erste OTP-Passwort mit einmaliger Nutzung zu steuern, durch das Endgerät des Anwenders berechnet wird, indem in das Endgerät (n + 1)-fach die nicht invertierbare Funktion nach der Verknüpfung der neuen "Passphrase" mit einem für den Server spezifischen "Kern"-Wert eingegeben wird, was somit ermöglicht, dieselbe "Passphrase" für verschiedene Server zu nutzen, während der Server seinerseits gemäß der OTP-Methode zunächst verifiziert, ob das geschickte erste Feld korrekt ist, dann mit Hilfe des aktuellen Modifizierungsschlüssels, den er besitzt, die Integrität der Gesamtheit der drei Felder verifiziert, dann, wenn die Verifikation erfolgreich ist, den OTP-Mechanismus mit Hilfe des neuen Verifikationswertes, der maximalen Anzahl von Nutzungen und des "Kerns" reinitialisiert, dann mit Hilfe des Modifizierungsschlüssels das chiffrierte Feld dechiffriert und den neuen Wert des Modifizierungsschlüssels extrahiert und schließlich den neuen Wert des Modifizierungsschlüssels lokal aktualisiert.
